# EUROPÄISCHE PATENTSCHRIFT

(11) **EP 2 953 826 B1**
(45) Veröffentlichungstag und Bekanntmachung des Hinweises auf die Patenterteilung: **18.09.2019**
(21) Anmeldenummer: 14703801.2
(22) Anmeldetag: 04.02.2014
(51) Int. Cl.: B60S 1/38

(54) **WINDABWEISERVORRICHTUNG FÜR EIN WISCHBLATT**
WIND DEFLECTOR DEVICE FOR A WIPER BLADE
DISPOSITIF DÉFLECTEUR DE VENT DESTINÉ À UN ESSUIE-GLACE

(30) Priorität: 07.02.2013 DE 102013202036
(43) Veröffentlichungstag der Anmeldung: 16.12.2015
(73) Patentinhaber: Robert Bosch GmbH, 70442 Stuttgart (DE)
(72) Erfinder: VAN DE ROSTYNE, Kris, B-3360 Opvelp (BE); HAUSER, Florian, 77855 Achern (DE); KLEIN, Juergen, 76275 Ettlingen (DE); WEILER, Michael, 77815 Buehl (DE)
(86) Internationale Anmeldenummer: PCT/EP2014/052112
(87) Internationale Veröffentlichungsnummer: WO 2014/122113

(56) Entgegenhaltungen:
- EP-A1- 2 106 978
- EP-A1- 2 423 104
- FR-A1- 2 967 116
- US-A- 6 010 098

## Beschreibung

### Stand der Technik

Es ist bereits eine Windabweiservorrichtung für ein Wischblatt, mit zumindest einer Windabweisereinheit, die dazu vorgesehen ist, eine Luftanströmung abzulenken, vorgeschlagen worden. Zur Erzielung guter Wischergebnisse muss ein Wischblatt möglichst zu jedem Zeitpunkt an einer zu wischenden Fahrzeugscheibe anliegen. Um ein Abheben des Wischblatts bei hohen Fahrgeschwindigkeiten zu vermeiden, werden Windabweisereinheiten mit einer hohen Bauweise eingesetzt, die für einen ausreichend hohen Anpressdruck sorgen. Um Luftverwirbelungen in einem Leebereich der Windabweisereinheit, die zu einem Hinterherziehen von Wasser führen kann, zu vermeiden, werden Windabweisereinheiten mit einer flachen Bauweise eingesetzt. Eine gattungsgemäße Windabweiservorrichtung ist beispielsweise aus der FR 2967116 A1 bekannt.

### Offenbarung der Erfindung

Die Erfindung geht aus von einer Windabweiservorrichtung für ein Wischblatt, mit zumindest einer Windabweisereinheit, die dazu vorgesehen ist, eine Luftanströmung abzulenken.

Es wird vorgeschlagen, dass die Windabweisereinheit eine Stelleinheit umfasst, die dazu vorgesehen ist, eine Windabweiserhöhe bei einer zunehmenden Luftanströmgeschwindigkeit zumindest bereichsweise passiv zu vergrößern, wodurch ein an der Windabweisereinheit angeordnetes Wischblatt bei sehr hohen Geschwindigkeiten zuverlässig an einer Fahrzeugscheibe anliegen kann und gleichzeitig ein Hinterherziehen von Wasser, insbesondere bei niedrigen Geschwindigkeiten, vermieden werden kann. Unter einer "Windabweisereinheit" soll in diesem Zusammenhang insbesondere eine Einheit verstanden werden, die dazu vorgesehen ist, eine auf die Windabweiservorrichtung und/oder auf ein Wischblatt wirkenden Luftanströmung beziehungsweise einen Fahrtwind abzuweisen und/oder für ein Anpressen eines Wischblatts auf eine zu wischende Oberfläche zu nutzen. Vorzugsweise besteht die Windabweisereinheit zumindest teilweise aus Gummi und/oder aus einem wenigstens teilelastischen Kunststoff. Bevorzugt weist die Windabweisereinheit zumindest eine konkave Anströmfläche auf. Die Windabweisereinheit weicht insbesondere von einer Endkappe, einer Wischlippe und/oder von einem Wischblattadapter ab. Vorteilhaft erstreckt sich die Windabweisereinheit in einem Betriebszustand über zumindest einen Großteil einer Längserstreckung eines Wischblatts. Bevorzugt weist die Windabweisereinheit zumindest ein Halteelement zur Befestigung an einer Federschiene und/oder einer Wischleiste auf. Unter einer "Luftanströmung" soll in diesem Zusammenhang insbesondere eine Strömung verstanden werden, die mit einer bestimmten Luftanströmgeschwindigkeit auf die Windabweisereinheit trifft. Unter einer "Luftanströmgeschwindigkeit" soll in diesem Zusammenhang insbesondere eine Geschwindigkeit einer Luftanströmung relativ zu wenigstens einem Punkt der Windabweiservorrichtung verstanden werden. Bei dem Auftreffen der Luftanströmung auf die Anströmfläche der Windabweisereinheit entsteht ein Luftanströmdruck. Unter einem "Luftanströmdruck" soll insbesondere eine flächenbezogene Kraft verstanden werden, welche in wenigstens einem Betriebszustand durch eine Luftanströmung der Windabweisereinheit auf diese wirkt. Unter "ablenken" soll in diesem Zusammenhang insbesondere abweisen und/oder umlenken verstanden werden. Unter einer "Stelleinheit" soll in diesem Zusammenhang insbesondere eine Einheit verstanden werden, welche in wenigstens einem Betriebszustand eine Einstellung der Windabweisereinheit insbesondere nach dem sogenannten Flossenstrahleffekt vornimmt. Unter einer "Windabweiserhöhe" soll in diesem Zusammenhang insbesondere eine Maximalerstreckung der Windabweisereinheit verstanden werden, die sich zumindest im Wesentlichen senkrecht zu einer Längserstreckung der Windabweisereinheit und senkrecht zu einer Luftanströmrichtung erstreckt. Insbesondere erstreckt sich die Windabweiserhöhe von einer oberen, vom zumindest einen Halteelement abgewandten Abschlusskante bis zum zumindest einen Halteelement auf möglichst kurzem Weg einer senkrechten Projektion. Insbesondere verläuft der möglichst kurze Weg senkrecht zur Abschlusskante und senkrecht zu einer zu wischenden Fahrzeugscheibe. Die Abschlusskante stellt insbesondere eine Kante dar, an welcher eine laminare Luftströmung, in Luftanströmrichtung betrachtet, zu einer turbulenten Luftströmung umgewandelt wird. Unter einer "Luftanströmrichtung" soll insbesondere eine Richtung einer Nettoströmung und insbesondere eine Richtung eines mittleren Massetransports in einer Luftströmung in einem Betrieb relativ zur Windabweisereinheit verstanden werden. Unter einer "Längserstreckung" soll in diesem Zusammenhang insbesondere eine größtmögliche Erstreckung verstanden werden. Unter einer "Erstreckung" eines Elements soll in diesem Zusammenhang insbesondere ein maximaler Abstand zweier Punkte einer senkrechten Projektion des Elements auf eine Ebene verstanden werden. Unter "passiv" soll in diesem Zusammenhang insbesondere frei von einer externen Krafteinwirkung verstanden werden, deren Ursprung von der Luftanströmung abweicht und/oder frei von einer elektrischen Steuer- und/oder Regeleinheit und/oder frei von elektrischen, pneumatischen und/oder hydraulischen Aktuatoren verstanden werden. Insbesondere kann unter "passiv" in diesem Zusammenhang auch selbstregelnd, also ohne eine manuelle Bedienung und/oder antriebslos verstanden werden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer weiteren Ausgestaltung wird vorgeschlagen, dass die Stelleinheit zumindest eine erste Querstrebe umfasst, die dazu vorgesehen ist, eine Vorderwandung der Windabweisereinheit mit einer Rückwandung der Windabweisereinheit zu verbinden, wodurch ein Finnenstrahleffekt vorteilhaft zur Vergrößerung der Windabweiserhöhe genutzt werden kann. Unter einer "Querstrebe" soll in diesem Zusammenhang insbesondere ein längliches Bauteil, wie insbesondere eine Strebe oder eine Stützwandung verstanden werden, die zumindest teilweise elastisch, insbesondere federelastisch ausgebildet und dazu vorgesehen ist, eine Schwenklagerung für die Vorderwandung und/oder die Rückwandung zu bilden. Vorteilhaft ist die zumindest erste Querstrebe einstückig mit der Vorderwandung und/oder der Rückwandung ausgebildet. Weiterhin vorteilhaft ist die Querstrebe ausschließlich an der Vorderwandung und der Rückwandung angeordnet, beziehungsweise lediglich mit der Vorderwandung und der Rückwandung verbunden. Besonders vorteilhaft umfasst die Stelleinheit zumindest zwei Querstreben. Unter "einstückig" soll insbesondere stoffschlüssig verbunden, wie beispielsweise durch einen Schweißprozess und/oder Klebeprozess usw., und vorteilhaft angeformt verstanden werden, wie durch die Herstellung aus einem Guss und/oder durch die Herstellung in einem Ein- oder Mehrkomponentenspritzverfahren, beziehungsweise besonders vorteilhaft in einem Extrusionsverfahren. Unter einer "Vorderwandung" soll in diesem Zusammenhang insbesondere eine Wandung verstanden werden, die dazu vorgesehen ist, eine Anströmfläche für die Luftanströmung bereitzustellen. Unter einer "Rückwandung" soll in diesem Zusammenhang insbesondere eine Wandung verstanden werden, die dazu vorgesehen ist, die Windabweisereinheit, in Luftanströmrichtung betrachtet, rückwärtig abzuschließen. Vorteilhaft sind die Vorderwandung und die Rückwandung zumindest in einem Teilbereich einstückig miteinander ausgebildet. Besonders vorteilhaft bildet die Abschlusskante zumindest einen Teil einer Grenze zwischen der Vorderwandung und der Rückwandung.

Des Weiteren wird vorgeschlagen, dass die Stelleinheit zumindest eine Bodenstrebe umfasst, die dazu vorgesehen ist, eine Vorderwandung der Windabweisereinheit mit einer Bodenwandung der Windabweisereinheit zu verbinden, wodurch bei einer stabilen Bauweise der Finnenstrahleffekt weiterhin vorteilhaft zur Vergrößerung der Windabweiserhöhe genutzt werden kann. Unter einer "Bodenstrebe" soll in diesem Zusammenhang insbesondere ein längliches Bauteil, wie insbesondere eine Strebe oder eine Stützwandung verstanden werden, die zumindest teilweise elastisch, insbesondere federelastisch ausgebildet und dazu vorgesehen ist, eine Schwenklagerung für die Vorderwandung um eine Bodenwandung zu bilden. Unter einer "Bodenwandung" soll in diesem Zusammenhang insbesondere eine Wandung verstanden werden, die an einer wischblattzugewandten Seite der Windabweisereinheit angeordnet ist und die Vorderwandung mit der Rückwandung verbindet. Insbesondere ist die Bodenwandung dazu vorgesehen, in einem Betriebszustand zumindest teilweise an einer Federschiene anzuliegen. Bevorzugt erstreckt sich die Bodenwandung zumindest über einen Großteil der Längserstreckung der Windabweisereinheit. Weiterhin vorteilhaft weist die Bodenwandung Halteelemente auf, die dazu vorgesehen sind, eine Federschiene in einem Betriebszustand an der Bodenwandung festzuhalten. Insbesondere sind die Halteelemente zumindest teilweise krallenförmig ausgebildet.

Ferner wird vorgeschlagen, dass die Stelleinheit zumindest teilweise elastisch verformbar ausgebildet ist, wodurch eine Schwenklagerung der Vorderwandung und der Rückwandung vorteilhaft unter Vermeidung von Gelenkverbindungen und somit mit geringem Gewicht und reduziertem konstruktiven Aufwand erzielt werden kann.

Erfindungsgemäß wird vorgeschlagen, dass sich zumindest eine Abschlusskante der Windabweisereinheit bei einer zunehmenden Luftanströmgeschwindigkeit zumindest teilweise entgegengesetzt zur Luftanströmung, insbesondere relativ zu einer Vorderkante der Windabweisereinheit, bewegt, wodurch ein Anpressdruck bei der zunehmenden Luftanströmgeschwindigkeit vorteilhaft weiter erhöht werden kann. Unter einer "Vorderkante" soll in diesem Zusammenhang insbesondere eine Kante der Windabweisereinheit verstanden werden, auf welche die Luftanströmung zuerst auftrifft. Eine sich senkrecht zur Luftanströmrichtung erstreckende Ebene, die sich in Luftanströmrichtung bewegt, schneidet insbesondere zunächst die Vorderkante, dann die zumindest eine Bodenstrebe, dann die zumindest eine Querstrebe und zuletzt die Abschlusskante.

Ist die Stelleinheit dazu vorgesehen, einen Krümmungsradius einer Anströmfläche bei einer zunehmenden Luftanströmgeschwindigkeit zu reduzieren, kann ein Anpressdruck bei zunehmender Luftanströmgeschwindigkeit auf einfache Weise erhöht werden.

Ferner wird vorgeschlagen, dass die Stelleinheit dazu vorgesehen ist, eine Veränderung der Windabweiserhöhe durch einen Luftanströmdruck zu erzielen, wodurch eine von der Luftanströmgeschwindigkeit geregelte und angetriebene Einstellung des Anpressdrucks erzielt werden kann und zusätzliche extern angesteuerte und/oder angetriebene Stellaktoren, wie insbesondere elektrisch, pneumatisch und/oder hydraulisch angetriebene Stellaktoren vermieden werden können.

Des Weiteren wird vorgeschlagen, dass die Windabweisereinheit zumindest zum Großteil in einem Extrusionsverfahren hergestellt ist, wodurch eine besonders kostengünstige und einfache Herstellung der Windabweiservorrichtung erzielt werden kann.

Des Weiteren wird ein Verfahren zur Vergrößerung einer Windabweiserhöhe einer Windabweiservorrichtung vorgeschlagen, wobei die Windabweiserhöhe bei einer zunehmenden Luftanströmgeschwindigkeit zumindest bereichsweise passiv vergrößert wird.

Die erfindungsgemäße Windabweiservorrichtung soll hierbei nicht auf die oben beschriebene Anwendung und Ausführungsform beschränkt sein. Insbesondere kann die erfindungsgemäße Windabweiservorrichtung zu einer Erfüllung einer hierin beschriebenen Funktionsweise eine von einer hierin genannten Anzahl von einzelnen Elementen, Bauteilen und Einheiten abweichende Anzahl aufweisen, die innerhalb dem Schutzbereich der Ansprüche definiert ist.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Wischblatt mit einer erfindungsgemäßen Windabweiservorrichtung in einer perspektivischen Darstellung,
- Fig. 2: die Windabweiservorrichtung in einer Schnittdarstellung und
- Fig. 3: die Windabweiservorrichtung in einer weiteren Schnittdarstellung.

### Beschreibung der Ausführungsbeispiele

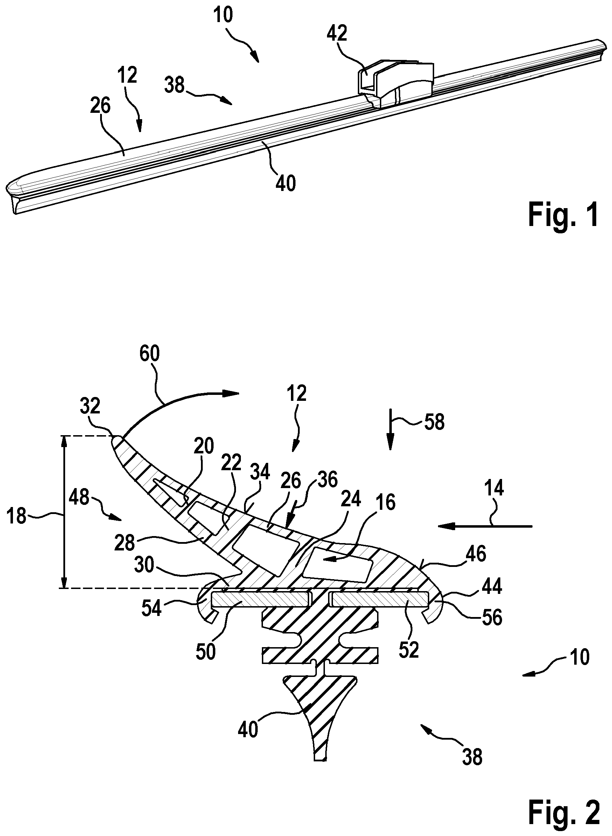

In der Figur 1 ist ein Wischblatt 10 mit einer Windabweiservorrichtung dargestellt. Das Wischblatt 10 ist zum Wischen einer Fahrzeugscheibe vorgesehen. Dazu weist das Wischblatt 10 eine Wischleiste 38 mit einer Wischlippe 40 auf. Das Wischblatt ist bekanntermaßen über einen Wischblattadapter 42 mit einem schwenkbar antreibbaren, nicht näher dargestellten Wischarm verbunden. Die Wischleiste 38 ist zumindest teilweise aus einem Elastomer, insbesondere aus einem Gummi, hergestellt.

Die Windabweiservorrichtung weist eine Windabweisereinheit 12 auf. Die Windabweisereinheit 12 ist dazu vorgesehen, eine Luftanströmung 14, beispielsweise während einer Fahrt, abzulenken. Die Luftanströmung 14 ist entsprechend einer ungefähren Luftanströmrichtung mit einem Pfeil dargestellt. Zum Ablenken der Luftanströmung 14 weist die Windabweisereinheit 12 eine Vorderwandung 26 auf, wie in Figur 2 gezeigt. Die Vorderwandung 26 bildet eine Vorderkante 44, auf welche die Luftanströmung 14 zuerst auftrifft. In Luftanströmrichtung der Luftanströmung 14 betrachtet, schließt sich an die Vorderkante 44 eine konvexe Fläche 46, dann eine konkave Anströmfläche 34 und zuletzt eine Abschlusskante 32 an. Idealerweise liegt in einem Betriebszustand die Luftanströmung 14 in Form einer laminaren Strömung an der Fläche 46 und an der Anströmfläche 34 an. In Luftanströmrichtung der Luftanströmung 14 betrachtet, befindet sich hinter der Abschlusskante 32 ein Leebereich 48, in welchem die Luftanströmung zum Großteil von einer laminaren Strömung in eine turbulente Strömung übergeht. Die Rückwandung 28 schließt die Windabweisereinheit 12, in Luftanströmrichtung betrachtet, rückwärtig ab. Somit begrenzt die Rückwandung 28 auch einen Teil des Leebereichs 48. Die Vorderwandung 26 und die Rückwandung 28 sind einstückig miteinander ausgebildet. Die Abschlusskante 32 bildet dabei eine Grenze beziehungsweise einen Übergang zwischen der Vorderwandung 26 und der Rückwandung 28. Durch das Ablenken der Luftanströmung 14 übt die Windabweisereinheit 12 unter anderem eine Anpresskraft 58 in Richtung der Wischlippe 40 aus.

In einem Bereich der Vorderkante 44 ist die Vorderwandung 26 mit einer Bodenwandung 30 einstückig ausgebildet. Die Bodenwandung 30 liegt auf einer Seite an zwei Federschienen 50, 52 des Wischblatts 10 an. Ferner ist die Bodenwandung 30 in einem leeseitigen Bereich einstückig mit der Rückwandung 28 ausgebildet. Somit weisen die Vorderwandung 26, die Rückwandung 28 und die Bodenwandung 30 einen im Wesentlichen dreieckigen Querschnitt auf. Die Bodenwandung 30 weist Halteelemente 54, 56 auf, welche die Federschienen 50, 52 in einem Betriebszustand an der Bodenwandung 30 festhalten. Die Halteelemente 54, 56 sind krallenförmig ausgebildet.

Die Windabweisereinheit 12 umfasst eine Stelleinheit 16, welche eine Windabweiserhöhe 18 der Windabweisereinheit 12 bei einer zunehmenden Luftanströmgeschwindigkeit passiv vergrößert. Dazu weist die Stelleinheit 16 eine erste Querstrebe 20 und eine zweite Querstrebe 22 auf. Die erste Querstrebe 20 und die zweite Querstrebe 22 verbinden die Vorderwandung 26 mit der Rückwandung 28. Dabei sind die erste Querstrebe 20 und die zweite Querstrebe 22 an einem Ende einstückig mit der Vorderwandung 26 ausgebildet und an einem anderen, gegenüberliegenden Ende einstückig mit der Rückwandung 28 ausgebildet. Die Querstreben 20, 22 sind federelastisch ausgebildet. Somit gestatten die Querstreben 20, 22 eine gewisse Verschiebung und/oder Verdrehung der Vorderwandung 26 und der Rückwandung 28 relativ zueinander. Die Querstreben 20, 22 sind ausschließlich an der Vorderwandung 26 und an der Rückwandung 28 angeordnet.

Die Stelleinheit 16 umfasst eine Bodenstrebe 24. Die Bodenstrebe 24 verbindet die Vorderwandung 26 mit der Bodenwandung 30. Dabei ist die Bodenstrebe 24 an einem Ende einstückig mit der Vorderwandung 26 ausgebildet und in einem anderen, gegenüberliegenden Ende einstückig mit der Bodenwandung 30 ausgebildet. Die Bodenstrebe 24 ist federelastisch ausgebildet. Somit gestattet die Bodenstrebe 24 eine gewisse Verschiebung und/oder Verdrehung der Vorderwandung 26 und der Bodenwandung 30 relativ zueinander. Die Bodenstrebe 24 ist ausschließlich an der Vorderwandung 26 und der Bodenwandung 30 angeordnet.

Die Windabweisereinheit 12 und die Stelleinheit 16 sind zusammen in einem Extrusionsverfahren hergestellt. Es ist in diesem Zusammenhang jedoch prinzipiell auch denkbar, dass die Windabweisereinheit 12 und die Stelleinheit 16 in einem Coextrusionsverfahren hergestellt sind.

Über die beschriebene Anordnung der Querstreben 20, 22 und der Bodenstrebe 24 lässt sich eine Form der Windabweisereinheit 12 mittels eines sogenannten Flossenstrahleffekts einstellen. Bei einem Anliegen der Luftanströmung 14 wirkt ein Luftanströmdruck 36 auf der Anströmfläche 34. Eine Höhe des Luftanströmdrucks 36 hängt dabei von der Luftanströmgeschwindigkeit ab. Bei zunehmender Luftanströmgeschwindigkeit erhöht sich der Luftanströmdruck 36. Der Luftanströmdruck 36 lenkt die Vorderwandung 26 elastisch teilweise in Richtung der Anpresskraft 58, bzw. teilweise in Richtung der Bodenwandung 30 aus. Dadurch erfolgt eine teilweise Verschwenkung der Querstreben 20, 22, wobei sich die an der Vorderwandung 26 angeordneten Enden teilweise in Richtung der Bodenwandung 30 und teilweise in Richtung der Vorderkante 44 bewegen. Insgesamt erfolgt dadurch eine sich verstärkende Krümmung der Windabweisereinheit 12. Die Abschlusskante 32 der Windabweisereinheit 12 bewegt sich dabei bei zunehmender Luftanströmgeschwindigkeit in einem kreisbogenförmigen Bewegungsverlauf 60 teilweise entgegengesetzt zur Luftanströmung 14 und weg von der Bodenwandung 30. Ein Krümmungsradius der Anströmfläche 34 reduziert sich bei der zunehmenden Luftanströmgeschwindigkeit. Somit verändert und regelt die Stelleinheit 16 die Windabweiserhöhe 18 durch den Luftanströmdruck 36.

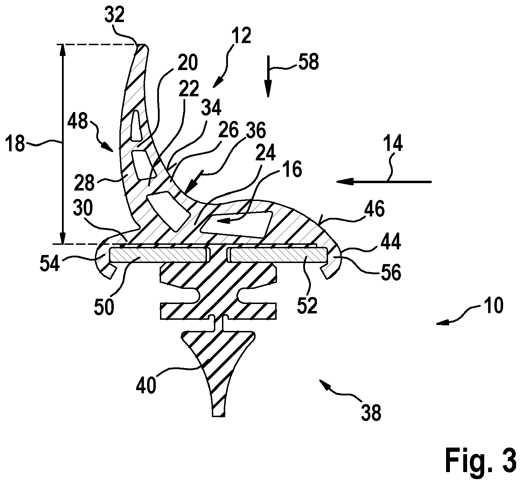

In der Figur 3 ist das Wischblatt 10 mit der Windabweisereinheit 12 bei einer größeren Luftanströmgeschwindigkeit und einem größeren Luftanströmdruck 36 gezeigt als in der Figur 2. Die Vorderwandung 26 ist im Bereich der Bodenstrebe 24 elastisch in Richtung der Bodenwandung 30 ausgelenkt. Die Querstreben 20, 22 sind teilweise elastisch verschwenkt, wodurch die Vorderwandung 26 eine stärkere konkave Krümmung und die Rückwandung 28 eine schwächere konvexe Krümmung aufweist. Die Windabweiserhöhe 18 der Windabweiservorrichtung ist aufgrund des größeren Luftanströmdrucks 36 größer als bei geringerem Luftanströmdruck 36, wie in Figur 2 gezeigt. Die Windabweiserhöhe18 wird also bei einer zunehmenden Luftanströmgeschwindigkeit passiv vergrößert. Bei hohen Luftanströmgeschwindigkeiten, die insbesondere bei Hochgeschwindigkeitsfahrten auftreten, vergrößert sich der Luftanströmdruck 36 durch die veränderte Geometrie der Windabweisereinheit 12 zusätzlich. Verringert sich die Luftanströmgeschwindigkeit wieder, reduziert sich ebenfalls der Luftanströmdruck 36 und die Windabweisereinheit 12 kehrt in ihre, in der Figur 2 gezeigten Ausgangsform federelastisch zurück.

Die unterschiedliche Luftanströmgeschwindigkeit resultiert auch von einer Wischblattstellung des Wischblatts 10 mit der Windabweisereinheit 12, relativ zur zu wischenden Fahrzeugscheibe, während einer Fahrt. Verläuft eine Ausrichtung des Wischblatts 10 in einer Längsrichtung zumindest im Wesentlichen parallel zur Luftanströmrichtung, wie beispielsweise in einer Nähe zu einer A-Säule eines Kraftfahrzeugs, so wird aufgrund einer geringen senkrecht zur Längsrichtung wirkenden Richtungskomponente der Luftanströmung 14 auch nur ein geringer Luftanströmdruck 36 ausgeübt. Die Windabweisereinheit 12 befindet sich dann in dem in der Figur 2 gezeigten Formzustand. Bei einer Wischbewegung des Wischblatts 10, bei welcher sich die senkrecht zur Längsrichtung wirkende Richtungskomponente vergrößert, wird ein größerer Luftanströmdruck 36 ausgeübt. Die Wischblatteinheit 12 verfährt dabei in den in der Figur 3 gezeigten Formzustand. Somit verändert sich bei gleichbleibender Luftanströmung 14 die Form der Windabweisereinheit 12 in Abhängigkeit einer Winkelstellung der Windabweisereinheit 12 relativ zur Luftanströmrichtung.

## Patentansprüche

1. Windabweiservorrichtung für ein Wischblatt (10), mit zumindest einer Windabweisereinheit (12), die dazu vorgesehen ist, eine Luftanströmung (14) abzulenken, wobei die Windabweisereinheit (12) eine Stelleinheit (16) umfasst, die dazu vorgesehen ist, eine Windabweiserhöhe (18) bei einer zunehmenden Luftanströmgeschwindigkeit zumindest bereichsweise passiv zu vergrößern, **dadurch gekennzeichnet, dass** sich zumindest eine Abschlusskante (32) der Windabweisereinheit (12) bei einer zunehmenden Luftanströmgeschwindigkeit zumindest teilweise entgegengesetzt zur Luftanströmung (14) bewegt.

2. Windabweiservorrichtung nach Anspruch 1, **dadurch gekennzeichnet, dass** die Stelleinheit (16) zumindest eine erste Querstrebe (20, 22) umfasst, die dazu vorgesehen ist, eine Vorderwandung (26) der Windabweisereinheit (12) mit einer Rückwandung (28) der Windabweisereinheit (12) zu verbinden.

3. Windabweiservorrichtung nach Anspruch 1 oder 2, **dadurch gekennzeichnet, dass** die Stelleinheit (16) zumindest eine Bodenstrebe (24) umfasst, die dazu vorgesehen ist, eine Vorderwandung (26) der Windabweisereinheit (12) mit einer Bodenwandung (30) der Windabweisereinheit (12) zu verbinden.

4. Windabweiservorrichtung nach einem der vorhergehenden Ansprüche, **dadurch gekennzeichnet, dass** die Stelleinheit (16) zumindest teilweise elastisch verformbar ausgebildet ist.

5. Windabweiservorrichtung nach einem der vorhergehenden Ansprüche, **dadurch gekennzeichnet, dass** die Stelleinheit (16) dazu vorgesehen ist, einen Krümmungsradius einer Anströmfläche (34) bei einer zunehmenden Luftanströmgeschwindigkeit zu reduzieren.

6. Windabweiservorrichtung nach einem der vorhergehenden Ansprüche, **dadurch gekennzeichnet, dass** die Stelleinheit (16) dazu vorgesehen ist, eine Veränderung der Windabweiserhöhe (18) durch einen Luftanströmdruck (36) zu erzielen.

7. Windabweiservorrichtung nach einem der vorhergehenden Ansprüche, **dadurch gekennzeichnet, dass** die Windabweisereinheit (12) zumindest zum Großteil in einem Extrusionsverfahren hergestellt ist.

8. Wischblatt (10) mit einer Windabweiservorrichtung nach einem der vorhergehenden Ansprüche.

9. Kraftfahrzeug mit einem Wischblatt (10) nach Anspruch 8.

## Claims

1. Wind deflector device for a wiper blade (10), with at least one wind deflector unit (12), which is provided to deflect an incident air flow (14), wherein the wind deflector unit (12) comprises an actuating unit (16), which is provided to passively increase a wind deflector height (18) at least in regions when an incident air flow velocity increases, **characterized in that**, as an incident air flow velocity increases, at least one end edge (32) of the wind deflector unit (12) at least partially moves in an opposed manner to the incident air flow (14).

2. Wind deflector device according to Claim 1, **characterized in that** the actuating unit (16) comprises at least one first transverse strut (20, 22), which is provided to connect a front wall (26) of the wind deflector unit (12) to a rear wall (28) of the wind deflector unit (12).

3. Wind deflector device according to Claim 1 or 2, **characterized in that** the actuating unit (16) comprises at least one bottom strut (24), which is provided to connect a front wall (26) of the wind deflector unit (12) to a bottom wall (30) of the wind deflector unit (12).

4. Wind deflector device according to one of the preceding claims, **characterized in that** the actuating unit (16) is designed to be at least partially elastically deformable.

5. Wind deflector device according to one of the preceding claims, **characterized in that** the actuating unit (16) is provided to reduce a radius of curvature of an incident flow surface (34) when an incident air flow velocity increases.

6. Wind deflector device according to one of the preceding claims, **characterized in that** the actuating unit (16) is provided to obtain a change in the wind deflector height (18) by means of an incident air flow pressure (36).

7. Wind deflector device according to one of the preceding claims, **characterized in that** the wind deflector unit (12) is at least largely produced in an extrusion method.

8. Wiper blade (10) with a wind deflector device according to one of the preceding claims.

9. Motor vehicle with a wiper blade (10) according to Claim 8.

## Revendications

1. Dispositif déflecteur de vent pour un balai d'essuie-glace (10), comprenant au moins une unité de déflecteur de vent (12) qui est prévue pour dévier un afflux d'air (14), l'unité de déflecteur de vent (12) comprenant une unité de réglage (16) qui est prévue pour augmenter au moins en partie de manière passive une hauteur du déflecteur de vent (18) dans le cas d'une augmentation de la vitesse d'afflux d'air, **caractérisé en ce qu'**au moins une arête de terminaison (32) de l'unité de déflecteur de vent (12) se déplace au moins en partie dans le sens opposé à l'afflux d'air (14) dans le cas d'une augmentation de la vitesse d'afflux d'air.

2. Dispositif déflecteur de vent selon la revendication 1, **caractérisé en ce que** l'unité de réglage (16) comprend au moins une première traverse (20, 22) qui est prévue pour relier une paroi avant (26) de l'unité de déflecteur de vent (12) à une paroi arrière (28) de l'unité de déflecteur de vent (12).

3. Dispositif déflecteur de vent selon la revendication 1 ou 2, **caractérisé en ce que** l'unité de réglage (16) comprend au moins une membrure de base (24) qui est prévue pour relier une paroi avant (26) de l'unité de déflecteur de vent (12) à une paroi de base (30) de l'unité de déflecteur de vent (12).

4. Dispositif déflecteur de vent selon l'une quelconque des revendications précédentes, **caractérisé en ce que** l'unité de réglage (16) est réalisée de manière à pouvoir au moins en partie être déformée élastiquement.

5. Dispositif déflecteur de vent selon l'une quelconque des revendications précédentes, **caractérisé en ce que** l'unité de réglage (16) est prévue pour réduire un rayon de courbure d'une surface d'afflux (34) dans le cas d'une augmentation de la vitesse d'afflux d'air.

6. Dispositif déflecteur de vent selon l'une quelconque des revendications précédentes, **caractérisé en ce que** l'unité de réglage (16) est prévue pour réaliser une variation de la hauteur du déflecteur de vent (18) par une pression d'afflux d'air (36).

7. Dispositif déflecteur de vent selon l'une quelconque des revendications précédentes, **caractérisé en ce que** l'unité de déflecteur de vent (12) est fabriquée au moins pour la majeure partie par un procédé d'extrusion.

8. Balai d'essuie-glace (10) comprenant un dispositif déflecteur de vent selon l'une quelconque des revendications précédentes.

9. Véhicule automobile comprenant un balai d'essuie-glace (10) selon la revendication 8.
